# EUROPEAN PATENT APPLICATION

(11) **EP 0 923 242 A2**
(43) Date of publication of application: **16.06.1999**
(21) Application number: 98250433.4
(22) Date of filing: 09.12.1998
(51) Int. Cl.: H04N 5/913

(54) **Copy prevention circuit capable of preventing a copy of image/aural sound signals without change of data structure in digital transmission**

(30) Priority: 09.12.1997 JP 35407297
(71) Applicant: NEC CORPORATION, Tokyo (JP)
(72) Inventor: Okuhara, Yasuhiko, Minato-ku, Tokyo (JP)
(74) Representative: Patentanwälte Wenzel & Kalkoff

(57) **Abstract**

Multiplexed stream information of image / aural sound / data, etc. processed by stream processing means (1) is separated into image / aural data and other data by the stream identification means (3) and one is output to the regenerative processing means (8, 9) via descramble means (2) and the other is connected to a data bus such as a PC, via scramble key discriminating means (5) and the I / means (6). The scramble key discriminating means (5) discriminates a data format of the signal output to the data port upon reception of scramble key information of scramble key extracting means (4) and does not output to the data bus by abolishing the information judged to be the scramble key relative to the image or the aural sound, but outputs only the scramble key excluding the image / aural sound.

## Description

### Background of the Invention:

The present invention relates to the processing of multiplexed stream information such as image (digital video) / aural sound (digital audio) / data (software / character such as Web information/ program, etc. graphic information, etc.) signals etc. and more particularly to processing for preventing a copy of image / aural sound signals as digital data.

A copy prevention circuit for image / aural sound signals has been conventionally realized by coping with an analogue signal level or by way of specially adding a control signal for copy prevention, or the like. An example of conventional copy prevention circuits of the type described is disclosed in unexamined Japanese Patent Publication Hei 8-195064, namely 195064/1996.

However, as will later be described in more detail, in the above conventional copy prevention circuit, it is inevitably necessary to provide a control bit for copy prevention. Even if copy prevention processing of data is desired, this cannot be realized by measures taken at a receiving terminal side alone. Accordingly, a systematic approach must be taken for the copy prevention processing of the data. This brings an effect on both a transmitting side and a receiving side, so that realization of the processing becomes difficult. Further, an increase in circuit scale or cost thereof is unavoidable.

Namely, in the structure where an exclusive bit is newly disposed to cope with the matter, it is necessary to make a change ( to dispose the exclusive bit on the transmitting side) in the control format of the system. It is further necessary to carry out an exclusive processing corresponding thereto on the receiving side. As a result, it is inevitable that the system becomes complex in structure and brings about increasing costs.

Further, it has been a target to deal with the image /aural sound alone in the conventional copy prevention circuit. Therefore, in case of the structure where the target is realized by PC (personal computer) accompanied with a storage medium, etc. for dealing with the data signal, a viewing limit to an input stream and protection of data are dealt with by constant processing regardless of the output path. Consequently, the live or de-scrambled image / aural sound signals also flow into the data processing path (data bus of PC). This causes the problem that a digital state copy of the image /aural sound signals is easily made.

In other words, in case of the structure where the regeneration of the information is limited by scramble, de-scrambled image /aural sound / data signals (or various kinds of signals which are of scramble key and scrambled) are physically kept in a free state (data flows into data bus of PC). The data signals can therefore be easily recorded in a storage means of a PC as digital signals. Accordingly, it been found has difficult to prevent a copy of the image /aural sound signals in a digital state as it is.

### Summary of the Invention:

It is therefore an object of the present invention to provide a copy prevention circuit which is capable of preventing a digital copy of the image /aural sound signals without requiring a change in data structure of the multiplexed stream to be input.

Other objects of the present invention will become clear as the description proceeds.

According to an aspect of the present invention, in the processing for preventing a copy in a digital state of the image / aural sound signals in a system performing a digital data transmission, a processing path for the image / aural (digital video / digital audio) signals and a processing path for data signals other than the image / aural signals (software / character such as Web information program, etc., graphic information, etc.) are separated from each other. Further, according to the present invention, the scramble key information relative to the image / aural sound data is prevented from being transmitted into a data processing path having a data storage device.

Concretely, the device maintaining the stream information storage function for performing regeneration of the image / aural sound /data stream is characterized in that a means for performing a stream input processing; a de-scramble means for releasing a scrambled signal ; a stream identification means for outputting data designated by a stream designating signal into respective ports; a means for extracting the scramble key information of the designated stream information; a means for discriminating a stream format corresponding to respective scramble key information; an I / F means for interfacing with a circuit performing a processing of the data other than the image / aural sound signals such as PC etc. a storage means for storing a stream information; a means for regenerating an image signal and a means for re-generating the aural signal are provided, and further that the processing is performed by a S.W. de-scramble means in the case where the data is scrambled.

Further, the input stream processing in the above device is characterized in that an I / F processing corresponding to input forms of respective data sending out sides such as a processing of communication systems, a processing of broadcast systems, a processing of storage medium systems, etc. is performed.

Furthermore, the stream identification processing of the above device is characterized in that the processing of the image / aural sound signals and the data signal is performed in separate paths by disposing output ports of two systems for outputting the image / aural sound signals and the data signals.

Moreover, the stream identification means of the above device is characterized in that, by judging the data format of the stream information designated for data output port. the scramble key information relative to said image and aural sound signals is not output into the data port connected with the storage medium storable of the scramble key information relative to the image and aural sound signals.

According to the present invention, it is possible to prevent a copy of the image / aural sound signals in a viewable digital state. Further, it can be applicable to a device corresponding to systems in various forms such as a communication system, a broadcast system, a storage file system, or the like.

Further, the processing can be realized without outputting all the information relative to the image / aural sound signals into a processing section having the storage medium.

### Brief Description of the Drawings:

Fig.1 is a block diagram for showing a structure of a conventional copy prevention circuit;
Fig.2 is a block diagram of the copy prevention system of the digital data according to the preferred embodiment of the present invention;
Fig.3 is a block diagram for showing a first example of the present invention;
Fig.4 is a block diagram for showing a second example of the present invention; and
Fig.5 is a block diagram for showing a third example of the present invention.

### Detailed Description of the Preferred Embodiments:

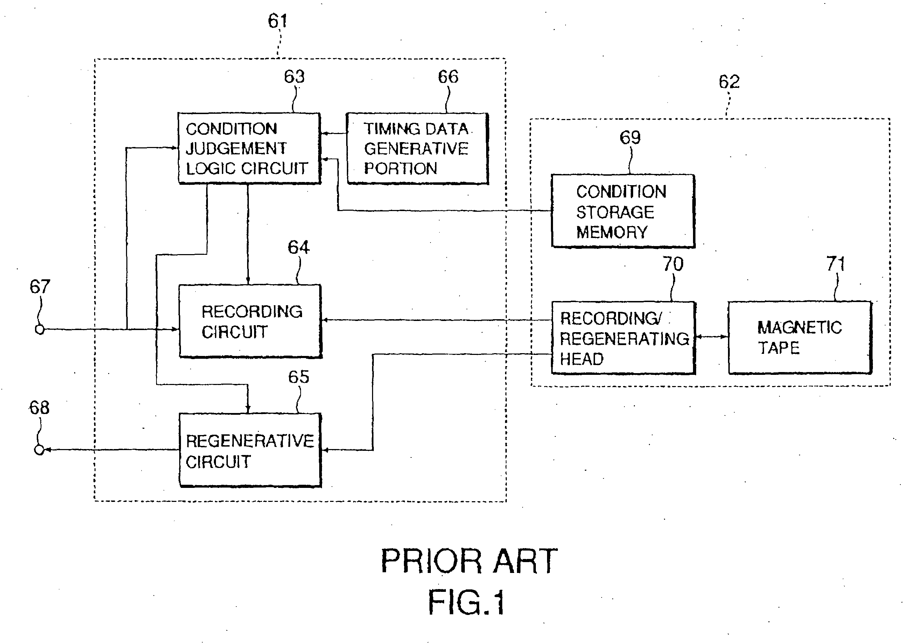

Referring to Fig.1, description is, at first made about the conventional copy prevention circuit disclosed in the above-mentioned unexamined Japanese Patent Publication Hei 8 - 195064, namely 195064/1996 in order to facilitate the understanding of the present invention.

In Fig.1, a digital VCR 61 is provided with a condition judgement logic circuit 63, a recording circuit 64 ,a regenerative circuit 65 and a timing data generating portion 66. A tape cassette 62 of the digital VCR 61 is provided with a condition storage memory 69. The condition storage memory 69 is equipped for every recording medium to record a digital video signal and this condition storage memory 69 is , for example, disposed in a given area of a magnetic tape 71 or in a semiconductor memory integrally fixed to the tape cassette 62.

From an input portion 67, an analogue video signal or the digital video signal is input. In the case where an input signal is an analogue input signal, a copyright protective information is superimposed ,for example, in a vertical blanking period and in the case where the input signal is the digital video signal , the copyright protective information is superimposed in the digital data. The input signal is given a given processing in the recording circuit 64 and recorded on the magnetic tape 71 via a recording / magnetic regenerating head 70. When in a recording mode, the condition judgement logic circuit 63 controls the recording circuit 64 by the following 3 kinds of patterns on the basis of the copyright protective information in the input signal and the copyright protective information of the condition storage memory 69.

In the case where no dubbing prohibition or limit is available in the copyright protective information of the input signal, a normal recording of the input signal is made possible by the recording circuit 64. In the case where a dubbing prohibition or limitation is available in the copyright protective information of the input signal and no information showing that a recording is permitted is available in the copyright protective information of the condition storage memory 69, the normal recording of the input signal by the recording circuit 64 is not made possible. As an example of making the normal recording impossible, there are instances where a recording level is made different from a normal value by disturbing AGC operation against the input signal , etc., or the input signal is scrambled, or a de-scrambling of the input signal is prohibited, etc. In the case where the information of the dubbing prohibition or the limitation is available in the copyright protective information of the input signal and the information showing that the recording is permitted is available in the copyright protective information of the condition storage memory 69, the normal recording of the input signal by the recording circuit 64 is made possible in accordance with a recording timing information of a dubbing allowed or an advance payment charge information corresponding to the recording time. When the input signal is recorded, the copyright protective information of the input signal is recorded in the given area of the magnetic tape 71 different from the condition storage memory 69.

However, as mentioned in the preamble of the instant specification, it is necessary to provide a control bit for a copy prevention in the conventional copy prevention circuit. This turns out to increase the scale of the circuit and cost thereof. In addition, another problem still remains in the conventional copy prevention circuit. Namely, a digital state copy of the image /aural sound signals is easily made in the conventional copy prevention circuit.

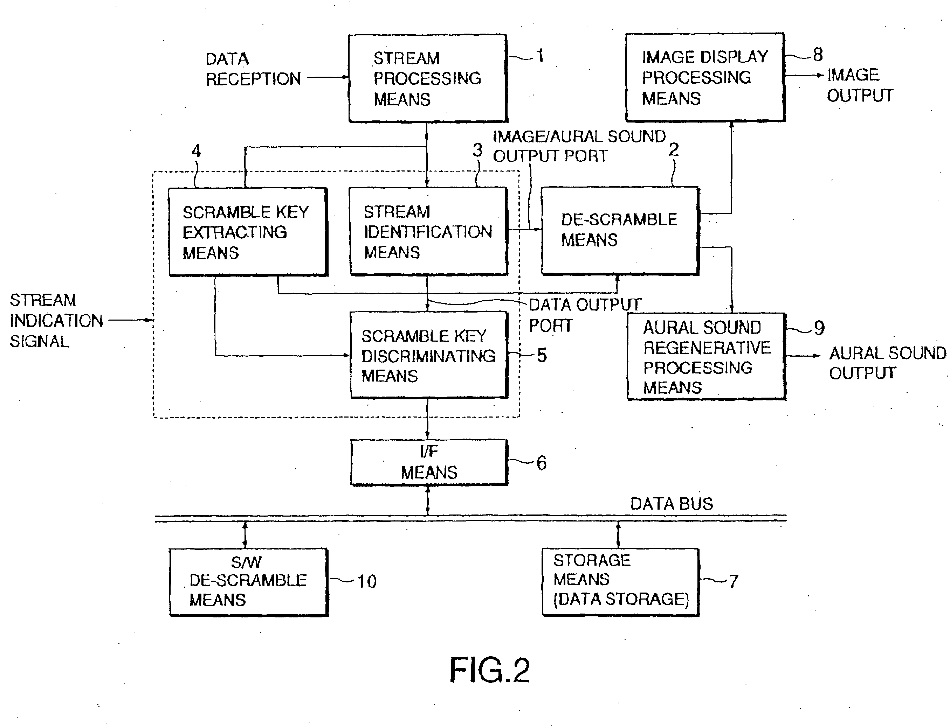

Referring now to Fig.2, description will proceed to a copy prevention circuit according to a preferred embodiment of the present invention.

Fig.2 is a block diagram for showing a structure of a copy prevention system of a digital data of the present invention. the copy prevention system of the digital data as shown in the drawing has; an input stream processing means 1; a de-scramble means 2; a stream identification means 3; a scramble key extracting means 4, a scramble key discriminating means 5; an I / F means 6 for connecting with data processing device; a stream information storage means 7; an image display processing means 8; an aural sound regenerative processing means 9 and a S/W de-scramble means 10.

The stream processing means 1 is a processing section for performing an input processing of a stream corresponding to each input I / F signal of the stream information multiplexed with image / aural sound /data, etc. by various input forms. the de-scramble means 2 is a processing section for performing a cipher release of an information scrambled in accordance with a certain designated format. The stream identification means 3 is a processing section wherein the image/ aural sound/ data signals corresponding to the stream information designated by a stream designating signal is separated from the multiplexed stream and given an output processing for an image / aural sound signal output port or data signal output port. The scramble key extracting means 4 is a processing section wherein a criterial control of the scramble key information corresponding to the stream information outputted to the image / aural sound output ports occurs.

The scramble key discriminating means 5 is a processing section for performing a control of the information relative to the image /aural sound from among the multiplexed scramble key information by discriminating the data format of each stream information and the corresponding scramble key information. The I / F means 6 is a processing section for performing the I / F processing for connecting the signal outputted to the data port by said stream identification means 3 to an equipment capable of handling various data signals such as PC, etc.

The storage means 7 is a storage device for storing the data signal other than the image /aural sound. The image display processing means 8 is a processing section for processing a display of the image signal. The aural sound regenerative processing means 9 is a processing section for performing a regenerative processing of the aural sound signal. the S / W de-scramble means 10 is a processing section for performing a cipher release in the case where data transmitted from the data port is given a scramble processing.

### [Examples]

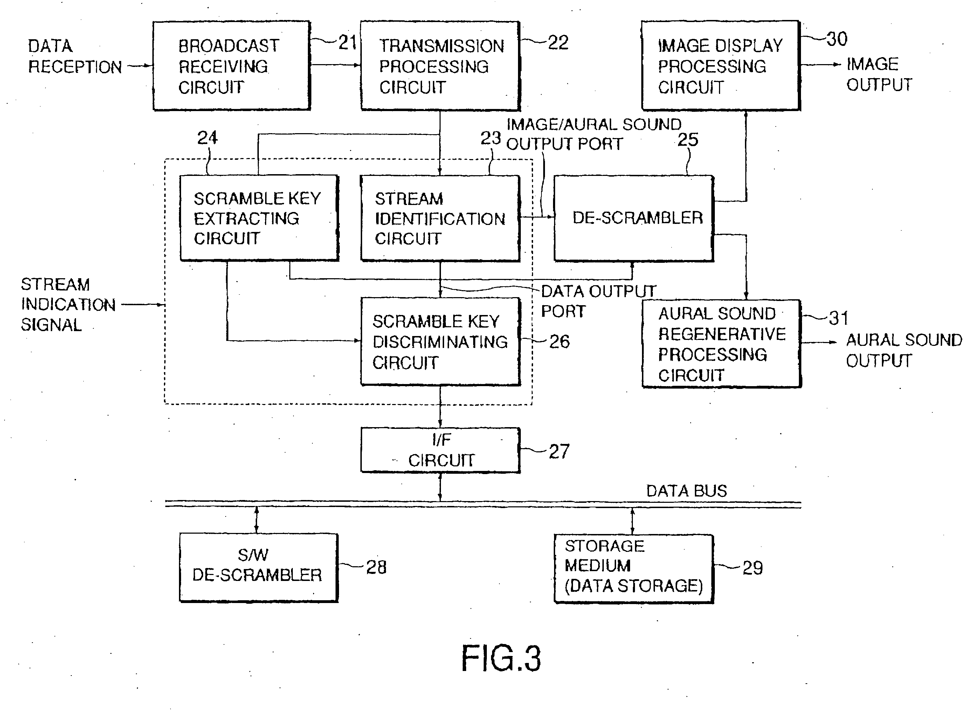

The operation of a copy prevention system in digital transmission to realize the above embodiment will be described as follows by using examples. Fig.3 is for showing a first example preventing an unlawful copy of the image /aural sound signals in digital transmission. After performing the same processing with a usual tuner such as choosing channels (transponders) for a first IF signal which received a broadcast wave of the image / aural sound / data signals which are digital-modulated and multiplexed by various kinds of receiving devices such as parabolic antennas or VHF / UHF antennas, extracting therefrom a channel multiplexed with necessary information and converting it into an intermediate frequency band, etc. a broadcast receiving circuit 21 then converts it to a digital signal by A / D conversion.

A transmission processing circuit 22 performs the processing which is usually given in a digital transmission system. The main processing performed in this circuit is digital demodulation of digital modulated signals and decoding of an error correcting code added in accordance with the system, etc. Further, a processing at the receiving side corresponding to a processing for releasing an interleave given by the transmitting side to disperse errors during transmission depending on a system, a processing for transmission scramble for the purpose of diffusing energy so as not to converge it (a bias of either "1" or "0" pattern ), a frame alignment processing for inverting synchronous signals for every constant packet to protect synchronization, etc. are performed. In this processing section, since it is the portion where a processing for a transmission format of the transmitting side is performed, contents of the processing are different depending on the system.

A de-scrambler 25 is a processing section where the information transmitted in encryption to limit usage of various information such as the image / aural sound / data signals by users at their own disposal for viewing or data storage ,etc. is processed, and it is a circuit where a scramble signal is released only for the information in the scrambled data whose viewing or data purchasing contract is established, Accordingly, for the information which is judged unnecessary to be limited by the transmitting side, scramble processing does not occur and, therefore, there may be some case where no processing will be particularly generated depending on information.

A stream identification circuit 23 separates data established by the stream designating signal for viewing the image / aural sound signals or storing the data signal from among multiplexed streams and outputs a selected stream information only . By installing output ports separately for the image and the aural sound signals and for the data signal in the output of the stream identification circuit 23, exclusive processes are performed respectively.

Each of the output ports for the image / aural sound and for the data is so constructed that a plurality of streams can be output simultaneously and, for this reason, also simultaneously a plurality of information such as data information or the like can be taken.

A scramble key extracting circuit 24 is a circuit for extracting all the designated scramble key information such as for the image / aural sound / data from among transmission streams. By this circuit, the scramble key information corresponding to viewing data of the image / aural sound signals is output to the de-scrambler 25. The scramble key information other than the above is output as a signal to perform an output control of a scramble key discriminating circuit 26 at a subsequent stage.

The scramble key discriminating circuit 26 judges whether the data format of signals output to the data port is the image /aural sound signal or the data signal, and is a circuit for discriminating a stream format corresponding to respective output information of the scramble key extracting circuit 24. By this circuit, the information judged to be the scramble key relative to the image or the aural sound is abolished and not output to an I / F circuit 27 at the subsequent stage. This is a processing circuit for making control to output only the information identified to be the scramble key information of the information excluding the image / aural sound to the subsequent stage.

Here, an operation is described for the case where the stream information corresponding to the data signal is set at the image / aural sound signal output port. The designated signal is output from the output port regardless of the kind of the information such as the image / aural sound / data, etc., but since this data signal is not the image / aural sound signal , it cannot be normally regenerated and hence becomes a meaningless data. Further, since a storage medium 29 of the information is not equipped at the subsequent stage of an output system of the image / aural sound signal port , it is not possible to store the information such as the image / aural sound / data, etch, in digital signal as it is.

In the case where the stream information of the image or aural sound signal is set at the data signal output port, since data structure of the stream information set by the stream identification circuit 23 can be judged, the scramble key information on the data identified as the image / aural sound signal is not output at the I / F circuit 27 at the subsequent stage. That is to say, even if a stream of the image / aural sound signals is set as an output to the data port, the scramble key information is abolished and not output to this data port. Accordingly, a digital data of the image /aural sound being scrambled is written in the storage medium 29 which is connected to the subsequent stage thereof, but the scramble can not be released because no scramble key information of the image / aural sound signals is written.

The I / F circuit 27 is a circuit for performing an I / F processing for connecting the information judged by the scramble key discriminating circuit 26 to be other than the scramble key of the image / aural sound signals to the equipment capable of dealing with the data signal. In this circuit, the PC or the like can be enumerated as one of external connecting equipment for dealing with the data signal. Since the PC is capable of dealing with various forms of data and being freely worked and is equipped with the storage medium 29, etc. such as HDD, etc., it can process a transmitted digital data as data processing terminal.

The storage medium 29 is one for storing the information other than the image / aural sound signals. Generally, the information other than the image / aural sound signals (program, Web data, character information, graphic information, etc. ) takes a form where the data itself has to be purchased and thus requires a system where it is possible to store the purchased data until it is not required by the user himself. A S/W de-scramble 28 is a processing circuit for performing a cipher release only in the case where data transferred from the I / F circuit 27 is given the scramble. With regards to the image / aural sound signals. however, the scramble can not be released since the scramble key is not included in the transferred data.

An image display processing circuit 30 is a processing circuit for performing display toward display units (TV or PC monitor, etc.) for the image signal output from the de-scrambler 25. Since a form of a connecting signal with an external image display equipment which is an output of this circuit becomes an analogue signal, duplication of the image data in a state of non-deterioration is not possible.

An aural sound regenerative processing circuit 31 is a circuit for performing a regeneration processing an aural sound data output from the image display processing circuit 30 as well as the de-scrambler 25. Similar to the image signal, duplication of the aural sound data in a state of non-deterioration is impossible since the form of the connecting signal with an external aural sound regenerative equipment becomes the analogue signal.

By the above described method, it becomes impossible to copy the image / aural sound signals in a digital state as it is and an unlawful duplication of the data of the image / aural sound in a non-deterioration state can be prevented.

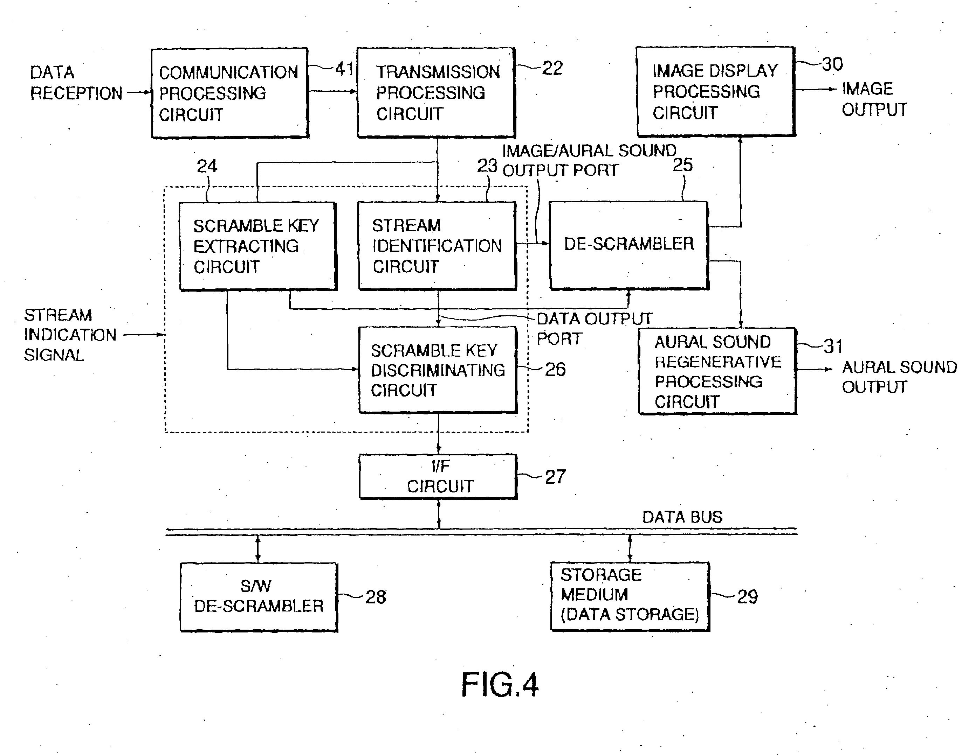

Fig.4 shows a second example to prevent the unlawful copy of the image /aural sound data in digital transmission. In Fig.4, a communication processing circuit 41 is a circuit for processing to deliver to the subsequent stage in accordance with a prescribed communication protocol in an image / aural sound / data signal system multiplexed with an MPEG (Moving Picture Experts Group) format. Since this communication procedure is stipulated for each and every system, processing contents are not standardized, but different according to operation systems. Not only reception of the broadcast wave but also transmission of the digital data using a communication network can be dealt with by this circuit.

Operation of the transmission processing circuit 22, the de-scrambler 25, the stream identification circuit 23, the scramble key extracting circuit 24, the scramble key discriminating circuit 26, the I / F circuit 27, the storage medium 29, the S / W de-scramble 28, the image display processing circuit 30 and the aural sound display processing circuit 31 is the same with Fig.2

By the above described method, it becomes impossible to copy the image / aural sound signals in a digital state as it is and an unlawful duplication of the data of the image / aural sound in a non-deterioration state can be prevented.

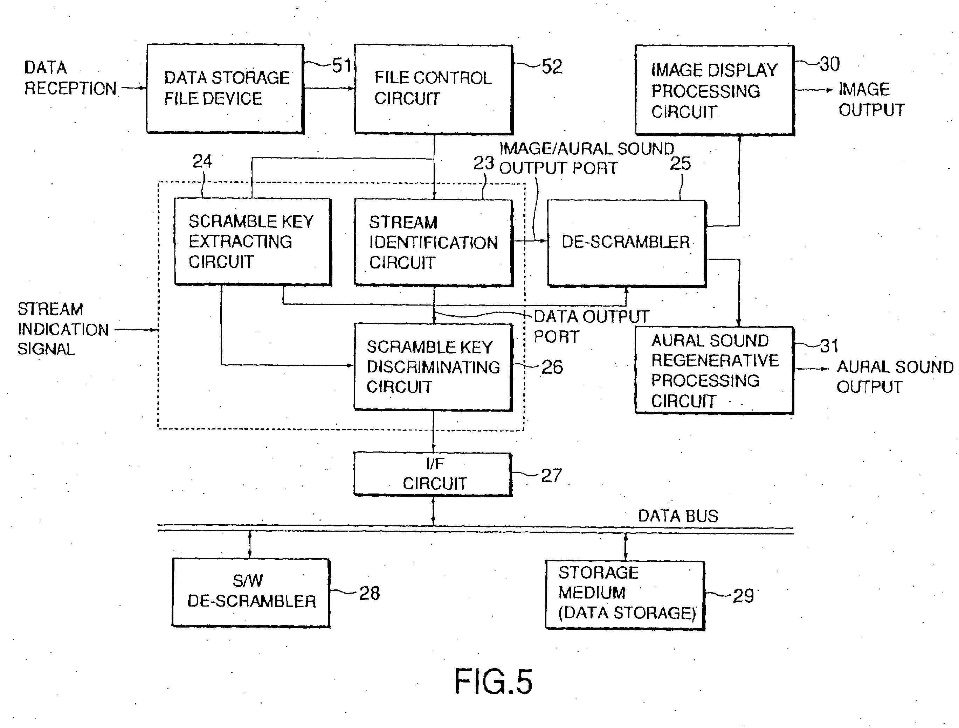

Fig. 5 shows a third example to prevent an unlawful copying of the image / aural sound data in digital transmission. In Fig.5, a data storing file device 51 is charged with the stream information multiplexed with the image / aural sound / data signals, etc. which are multiplexed in the MPEG format and becomes a signal source of various information to be processed. The information stored in this device is output to the processing section of the subsequent stage by request from a terminal side. The data storing file device 51 may have various forms such as HDD, FDD, Disc- array, Magnetic recording device, Optical recording device, IC- card (Memory card) and Memory, or the like.

A file control circuit 52 is a circuit for controlling to read out a stream multiplexed with a necessary data from the data storing file device 51 stored with information, etc. and for taking an interface with the processing section of the subsequent stage. Not only transmission of the digital data using reception of the broadcast wave and the communications network, but also an input form of the data from the storage medium such as files can be dealt with by this circuit. The subsequent processing after the stream identification is the same with Fig.3.

By the above described method, it becomes impossible to copy the image / aural sound signals in a digital state as it is and, similarly ,unlawful duplication of the data of the image / aural sound in a non-deterioration state can be prevented.

The copy prevention circuit in digital transmission according to the present invention is constructed such that signal processing paths of data system and an image / aural sound system are separated from each other and the scramble key information relative to the image / aural sound signals is not passed to the storage medium. Consequently, there is no need to change the data structure of the multiplexed stream to be input and the prevention of a digital copy of the image /aural sound signals becomes possible.

Though the present invention has thus far been described in conjunction with only preferred embodiments thereof, it will yet be readily possible for anyone skilled in the art to put the present invention into effect in various other manners.

## Claims

1. A copy prevention circuit in digital transmission for use in a device for processing a multiplexed stream capable of identifying if a data format being transmitted is one of an image, an aural sound, data and respective additional data thereof and having a storing function of said stream information, characterized in that said copy prevention circuit comprises:
means for separating a first path to process said image and / or aural signal and a second path to process data other than said image and/or aural signal from each other; and
means for preventing sending out a scramble key information associated with said image and/or aural signal to the storing function of said stream information.

2. A copy prevention circuit in digital transmission for use in a device for processing a multiplexed stream capable of identifying if a data format being transmitted is one of an image, an aural sound , data and respective additional data thereof and having a storing function of said stream information, characterized in that said copy prevention circuit comprises:
stream processing means (1) for performing an input processing of said multiplexed stream;
stream identification means (3) for separating the data designated by a stream designating signal from said multiplexed stream to output it to respectively applicable ports;
scramble key extracting means (4) for extracting the scramble key information for said image, aural sound and data from within said multiplexed stream;
de-scramble means (2) for releasing a scramble signal of said image and/or aural sound by using the scramble key information extracted from said scramble key extracting means (4);
regenerating means (8,9) for regenerating said de-scrambled image and/or aural sound data respectively;
data processing means for processing a data signal separated by said stream identification means; and
scramble key discriminating means (5), which is connected between said stream identification means (3) and said data processing means, for discriminating the scramble key information relative to the image / aural sound from the scramble key information extracted by said scramble key extracting means (4), and for abolishing the scramble key information relative to said image / aural sound from the output to said data processing means.

3. A copy prevention circuit in digital transmission as claimed in claim 2, characterized in that said stream processing means (1) is composed of a broadcasting receiving circuit (21) for receiving a broadcast wave of digital modulated and multiplexed image /aural sound /data signals and converting it/them into digital signals, and a transmission processing circuit (22) for performing a given transmission processing for the converted digital signals.

4. A copy prevention circuit in digital transmission as claimed in claim 2, characterized in that said stream processing means (1) is composed of a communication processing circuit (41) for performing processing in accordance with a communication protocol as stipulated in an image / aural sound / data signal system multiplexed in MPEG format, and a transmission processing circuit (22) for performing the given transmission processing for said processed digital signal.

5. A copy prevention circuit in digital transmission as claimed in claim 2, characterized in that said stream processing means (1) is composed of data storing file device (51) for storing the stream information multiplexed with the image / aural sound / data signal, etc. which are multiplexed in MPEG format, and a file control circuit (52) for controlling a reading out of the stream multiplexed with necessary data from said data storing file device (51).

6. A copy prevention circuit in digital transmission as claimed in claim 2, characterized in that said stream processing means (1) is provided with dual output ports for separating signals from said stream processing means (1) into the image / aural sound signal and the data signal and outputting one to said regenerating means via said de-scramble means (2) and the other one to said data processing means via said scramble key discriminating means (5).
